# FASCICULE DE BREVET EUROPEEN

(11) **EP 2 078 840 B1**
(45) Date de publication et mention de la délivrance du brevet: **30.11.2011**
(21) Numéro de dépôt: 09150076.9
(22) Date de dépôt: 06.01.2009
(51) Int. Cl.: F02D 41/02, F01N 11/00

(54) **Strategie de mise en oeuvre d'un processus de chauffage rapide d'un catalyseur**
Strategiezur Umsetzung eines Schnellerhitzungsprozesses eines Katalysators
Strategy for implementing a quick-heating process of a catalyst

(30) Priorité: 11.01.2008 FR 0850150
(43) Date de publication de la demande: 15.07.2009
(73) Titulaire: Peugeot Citroën Automobiles SA, 78140 Vélizy-Villacoublay (FR)
(72) Inventeur: Guerin, Stéphane, 92250 La Garenne Colombes (FR); Folliot, Pascal, 78280 Guyancourt (FR); Singer, Arnold, 92400 Courbevoie (FR)
(74) Mandataire: Ménès, Catherine

(56) Documents cités:
- DE-A1- 10 162 115
- DE-A1- 10 210 550
- JP-A- 9 228 824
- US-A- 5 261 230
- US-A- 5 390 491

## Description

L'invention concerne les systèmes de dépollution des moteurs Diesel et, plus particulièrement, un dispositif et une stratégie de mise en oeuvre d'un processus de compensation du vieillissement des catalyseurs d'oxydation utilisés pour cette dépollution.

Les catalyseurs qui brûlent les hydrocarbures et le monoxyde de carbone contenus dans les gaz d'échappement sont composés d'une céramique imprégnée de matériaux à base de métaux précieux tels que le platine ou le palladium. On comprend que ces produits sont onéreux et qu'il est donc nécessaire de limiter au plus juste les métaux précieux qu'ils utilisent.

La capacité de traitement des polluants par un catalyseur d'oxydation dépend étroitement de sa température de fonctionnement et, en particulier, de la température des gaz d'échappement.

L'un des inconvénients majeur de cette technologie de dépollution est le vieillissement du catalyseur provoqué, d'une part par les températures élevées auxquelles il est donc soumis pour fonctionner et, d'autre part, par les dommages causés par certains éléments contenus dans le carburant et l'huile du moteur, tels que le souffre, le phosphore, le calcium..

Ce vieillissement se caractérise par une diminution plus ou moins importante de l'efficacité du catalyseur à mesure que la distance parcourue par le véhicule augmente.

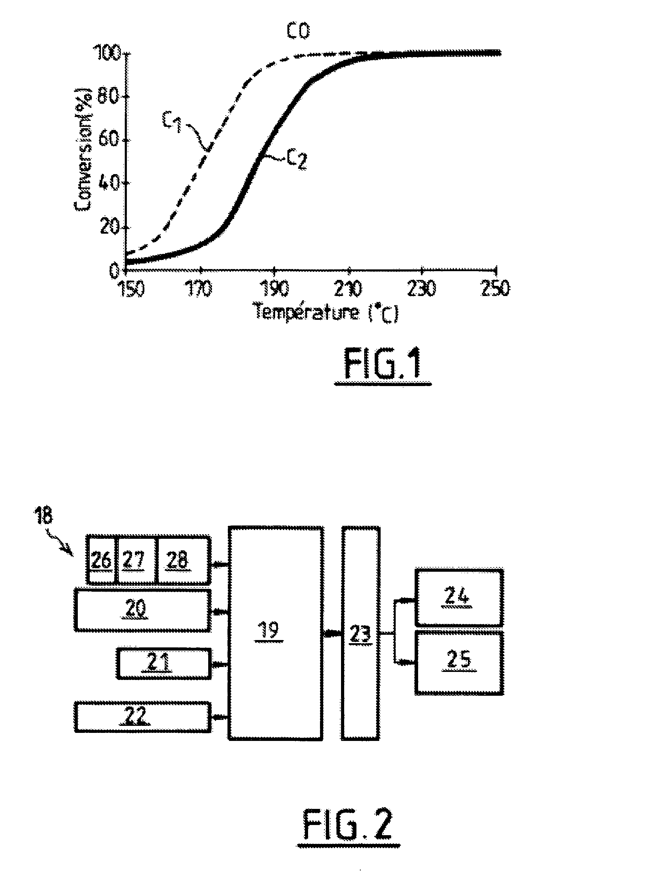

La figure 1 montre une courbe du pourcentage de monoxyde de carbone converti par un catalyseur en fonction de sa température de fonctionnement, pour un catalyseur neuf (C₁) et pour un catalyseur vieilli (C₂).

On constate que l'impact du vieillissement se traduit sur la courbe C₂ par un décalage vers des températures plus élevées. Cela aura pour conséquence des émissions de monoxyde de carbone et d'hydrocarbures plus importantes durant les phases de démarrage du moteur et de montée en température du catalyseur.

L'une des solutions appliquées actuellement pour compenser cette dégradation est d'augmenter la quantité de métaux précieux dans des proportions suffisantes pour assurer jusqu'au terme de la durée de vie normale du catalyseur, une efficacité de traitement des polluants supérieure au seuil réglementaire.

On comprend que, si cette solution est efficace, elle est très pénalisante en terme de coût puisqu'elle nécessite d'augmenter au-delà du nécessaire la quantité de métaux précieux du catalyseur neuf pour assurer son fonctionnement correct dans son état le plus dégradé.

On a donc également proposé de compenser cette perte d'efficacité par une augmentation plus rapide de la température des gaz d'échappement dans certaines phases de fonctionnement du moteur. Cette augmentation est obtenue par dégradation du rendement du moteur (vannage, retard de l'injection principale...) ce qui augmente la consommation de carburant durant ces phases.

Ce procédé est déjà utilisé associé à des moteurs à essence. Un example est divulgué dans la demande DE10210550. Pour les moteurs Diesel il a jusqu'ici été jugé non rentable en raison de l'augmentation de la consommation de carburant et de la dégradation simultanée d'autres prestations telles que les émissions d'oxydes d'azote et de particules, le bruit et la stabilité de combustion du moteur.

Pour qu'un tel procédé devienne techniquement applicable, il était nécessaire d'optimiser non seulement la stratégie de chauffage des gaz d'échappement mais également celle de la mise en oeuvre dudit chauffage.

Le but de l'invention est donc de proposer un dispositif et une stratégie de mise en oeuvre d'un mode de chauffage rapide, au démarrage du véhicule, des catalyseurs d'oxydation utilisés pour la dépollution notamment des moteurs Diesel, en vue de compenser leur vieillissement sans augmenter les émissions de polluants ni dégrader les prestations dudit véhicule.

A cet effet, l'invention a pour objet une stratégie de mise en oeuvre d'un processus de chauffage rapide d'un catalyseur d'oxydation intégré à la ligne d'échappement d'un moteur, notamment d'un moteur Diesel, dont le fonctionnement est commandé par un calculateur de contrôle comportant un gestionnaire des modes de combustion et un coordinateur de gestion du passage d'un mode de combustion à un autre, caractérisée en ce que l'on détermine la durée d'activation du mode de chauffage rapide en fonction d'un modèle d'endommagement du catalyseur et l'instant de sa mise en oeuvre en fonction des conditions de fonctionnement du moteur, ladite détermination étant effectuée au moyen d'une unité de surveillance et de contrôle du processus de chauffage rapide connectée à l'entrée du gestionnaire des modes de combustion.

Selon d'autres caractéristiques avantageuses du dispositif :
- L'unité de surveillance et de contrôle est constituée d'un module d'élaboration de l'état de vieillissement du catalyseur, d'un module de commande du mode de chauffage rapide et d'un module de décision pour transmettre l'instruction d'activation ou de désactivation dudit mode au gestionnaire des modes de combustion.
- Dans un mode de réalisation préféré, le module d'élaboration de l'état de vieillissement du catalyseur reçoit les informations fournies par une sonde de température placée en aval du catalyseur et comptabilise le temps passé au dessus d'une température déterminée, d'une part dans un mode de fonctionnement moteur générant de l'exotherme aux bornes du catalyseur, et d'autre part, dans un mode générant ladite température uniquement à la source.
- Le module de commande reçoit des informations concernant le temps écoulé depuis le démarrage du moteur, la température de l'air, de l'eau, la pression atmosphérique, la durée de fonctionnement au ralenti du moteur et la dilution d'huile par le carburant moyenne depuis la dernière activation du mode de chauffage rapide.
- Le module de décision reçoit en plus des demandes d'activation ou de désactivation du mode de chauffage rapide émises par le module de commande des informations correspondant à des défauts dans les systèmes et le fonctionnement du moteur pour, selon la nature de ces défauts, transmettre au gestionnaire des modes de combustion une demande d'inhibition dudit mode.
- Le module de décision comporte un circuit permettant d'activer manuellement le mode de chauffage rapide.
- Lorsque une instruction de passage en mode de chauffage rapide est donnée au coordinateur par le gestionnaire des modes de combustion, celui-ci modifie d'abord les consignes sur l'air, puis sur la pression d'injection et enfin sur l'injection.

De préférence, le mode de chauffage rapide est activé lorsque toutes les conditions suivantes sont réunies :
- La température d'air, la température d'eau, la pression atmosphérique,le temps qui s'est écoulé depuis le démarrage du moteur sont compris entre deux valeurs seuils prédéterminées, la valeur seuil inférieure correspondant au début de la période la plus favorable du cycle du moteur et la valeur seuil supérieure à l'obtention de la température d'efficacité du catalyseur,
- Le moteur est au ralenti depuis une durée minimum prédéterminée,
- Le modèle d'endommagement du catalyseur utilisé fait apparaître un niveau d'endommagement minimum déterminé,
- La dilution d'huile moyenne depuis la dernière activation de la stratégie est inférieure à un seuil préétabli.

La désactivation est par contre prévue dès que l'une des conditions suivantes est satisfaite :
- Le temps qui s'est écoulé depuis l'activation du mode de chauffage rapide est supérieur à la durée correspondant à l'endommagement estimé du catalyseur.
- La température ambiante n'est pas comprise entre les deux seuils déterminés délimitant la période favorable à la mise en oeuvre de la stratégie de chauffage rapide.
- Le couple moteur est supérieur à un seuil déterminé pendant un temps minimum déterminé, de sorte que les conditions normales de montée en température du catalyseur sont atteintes.

Selon d'autres caractéristiques avantageuses de la stratégie :
- La fenêtre de température d'air, la fenêtre de température d'eau, la fenêtre de pression atmosphérique sont déterminées en fonction de la dilution de carburant dans l'huile.
- Le temps après démarrage du moteur et avant activation du mode de chauffage rapide et la durée d'activation de ce mode sont déterminés en fonction du compromis émissions polluantes/dilution d'huile souhaité pour une application et une charge de catalyseur donnée, et avec un catalyseur de vieillissement donné.
- Le mode de chauffage rapide est activé de préférence lorsque le moteur fonctionne à haut régime et forte charge.
- Le mode de chauffage rapide est activé uniquement sur les accélérations du cycle du moteur.
- Le mode de chauffage rapide est activé une fois et une seule durant le temps de fonctionnement du moteur compris entre deux démarrages.

D'autres caractéristiques et avantages de l'invention apparaîtront clairement à la lecture de la description ci-après, donnée à titre indicatif en référence aux dessins annexés dans lesquels :
- La figure 1 est un diagramme illustrant l'effet du vieillissement sur l'efficacité d'un catalyseur
- La figure 2 est un schéma fonctionnel de l'invention
- La figure 3 montre l'architecture fonctionnelle d'un moteur Diesel intégrant l'invention
- La figure 4 est une courbe de la durée d'activation du mode chauffage rapide en fonction de la distance parcourue par le véhicule.
- La figure 5 est un diagramme d'un modèle d'endommagement du catalyseur
- La figure 6 montre la gestion du passage au mode de chauffage rapide du catalyseur.

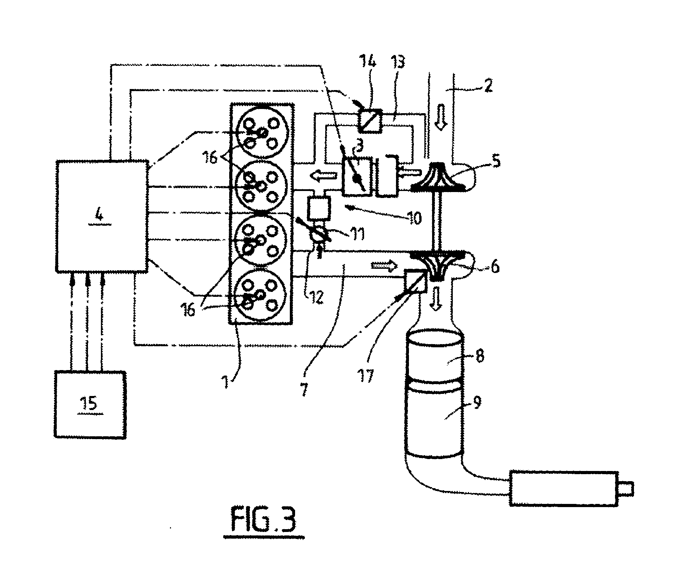

Sur la figure 3 on a représenté, de façon schématique un moteur Diesel 1 à quatre cylindres. Le circuit d'admission de ce moteur comporte un conduit 2 un papillon 3 dont l'ouverture est commandée par un dispositif motorisé connecté au calculateur de contrôle moteur 4, un compresseur 5 actionné par une turbine 6 installée dans le conduit d'échappement 7.

La ligne d'échappement comporte, en aval de la turbine 6, un catalyseur 8 suivi d'un filtre à particules 9.

Un circuit de recirculation des gaz d'échappement 10, ci-après appelé EGR, est disposé, de la manière habituelle, entre le conduit d'échappement 7, en amont de la turbine 6, et le conduit d'admission 2, en aval du papillon 3.

Une vanne 11 commandée par un actionneur connecté au calculateur de contrôle moteur 4 est disposée dans le conduit 12 du circuit EGR 10.

On trouve encore un circuit 13 de dérivation de l'air entrant disposé entre le conduit d'admission 2, en amont du compresseur 5 et en aval du papillon 3. La vanne 14 disposée dans ce circuit est commandée par le calculateur de contrôle moteur 4 auquel elle est connectée.

Le calculateur de contrôle moteur 4 reçoit sur ses entrées 15 des informations de capteurs conventionnels du moteur ou des informations reconstituées : Température d'eau, température d'air ambiant, pression atmosphérique et kilométrage véhicule. En retour, il commande les différents dispositifs précités ainsi que les injecteurs 16 et le dispositif 17 de pilotage du turbocompresseur.

Il n'est pas utile d'activer la stratégie de chauffage rapide du catalyseur à chaque démarrage du véhicule. En effet, dans certaines conditions, quand les gaz sont déjà suffisamment chauds (redémarrage, climat chaud..), accélération rapide après le démarrage ou quand le catalyseur est neuf ou peu âgé, la température optimale est atteinte suffisamment vite. Compte tenu de l'effet pénalisant de cette stratégie sur les performances du moteur, il est donc nécessaire de prendre en compte le besoin réel de l'activation.

Pour ce faire, comme on l'a représenté schématiquement figure 2, un dispositif de surveillance et de contrôle 18, appelé "superviseur" dans la description ci-après, de la stratégie de chauffage rapide est ajouté à l'entré du gestionnaire des modes de combustion 19 intégré au calculateur de contrôle moteur 4 qui gère les priorités entre les différents modes de combustion, par exemple, la demande de régénération du filtre à particules 20, le mode nominal 21, ou autres modes spécifiques 22.

En sortie du gestionnaire, se trouve un coordinateur 23 qui gère le passage d'un mode de combustion à l'autre lorsque un tel changement est demandé.

Dans la stratégie de chauffage rapide, le coordinateur 23 agit sur les consignes de gestion de l'air 24 et d'injection 25.

Le rôle du superviseur 18 est d'activer et désactiver le mode de chauffage rapide du catalyseur de façon à conserver l'efficacité de celui-ci quelque soit son niveau d'endommagement et cela en limitant les risques et impacts liés à ce mode de combustion spécifique, tel que la dilution de carburant dans l'huile.

Le superviseur est composé d'un module 26 permettant de connaître l'état de vieillissement du catalyseur, d'un module 27 de commande du mode de chauffage rapide du catalyseur et enfin d'un module de décision 28 permettant, en particulier d'inhiber la fonction ou de l'activer manuellement.

L'activation du mode chauffage rapide est ajustée dans le temps et en durée en fonction des informations fournies au superviseur 18.

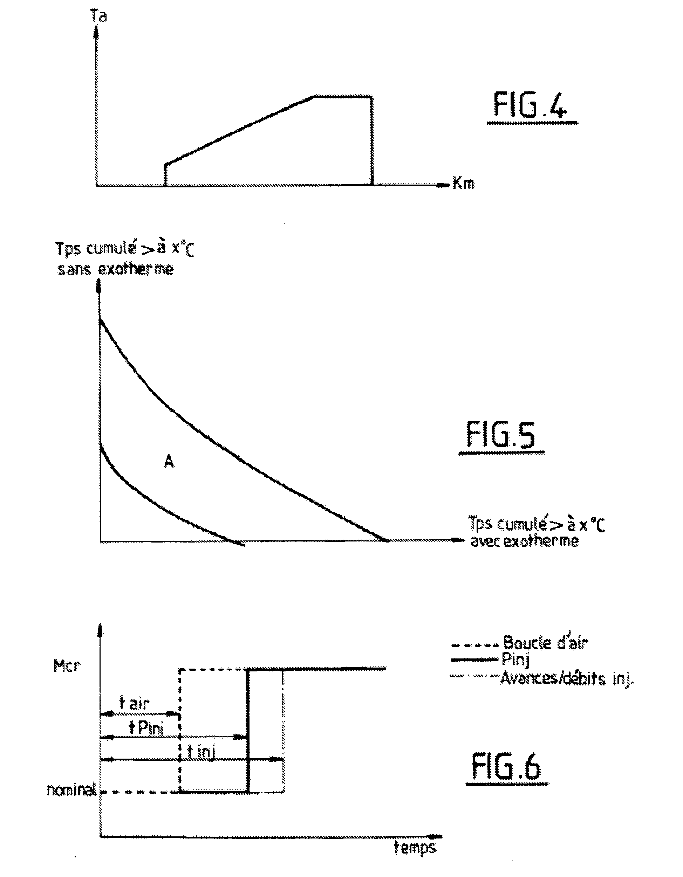

La première de ces informations, exploitée par le module 26, concerne le niveau d'endommagement du catalyseur ; celui-ci détermine la durée d'activation du mode chauffage rapide. Plusieurs méthodes sont envisageables pour ajuster cette durée. La plus simple consiste à fixer celle-ci en fonction de la distance parcourue par le véhicule, comme le montre la figure 4.

Pour obtenir une information plus précise, on peut, par exemple, adapter cette durée en fonction des niveaux de températures vus par le catalyseur. En d'autre termes, il s'agit d'un modèle d'endommagement qui comptabilise le temps passé au dessus d'une température déterminée, soit dans un mode de fonctionnement moteur générant de l'exotherme aux bornes du catalyseur comme le mode de régénération du filtre à particules, soit dans un mode générant la température uniquement à la source.

Ainsi, la durée de chauffage rapide nécessaire, déterminée en fonction des températures réellement mesurées par la sonde aval du catalyseur, est adaptée au profil de fonctionnement réellement vu par le catalyseur.

Un exemple de diagramme obtenu est représenté figure 5. Avec ce modèle, il est possible, non seulement de déterminer la durée du chauffage mais également l'intérêt de sa mise en action. Celle-ci n'étant utile qu'entre un endommagement minimum et un endommagement extrême, correspondant à la plage A de la figure 5.

Une autre tâche du superviseur consiste à déterminer l'instant le plus favorable à l'activation de la stratégie de chauffage rapide.

Pour ce faire, le temps écoulé depuis le démarrage du moteur est mesuré ainsi que la température de l'air, de l'eau, la pression atmosphérique et la durée de fonctionnement au ralenti du moteur.

On mesure également la dilution de carburant dans l'huile moyenne depuis la dernière activation de la stratégie de chauffage rapide.

Ces informations sont reçues dans le module de commande 27 qui émet une demande d'activation du mode de chauffage rapide lorsque :
- La température d'air, la température d'eau, la pression atmosphérique, le temps qui s'est écoulé depuis le démarrage du moteur sont compris entre deux valeurs seuils prédéterminées. La valeur seuil inférieure correspondant au début de la période la plus favorable du cycle et la valeur seuil supérieure à l'obtention de la température d'efficacité du catalyseur,
- Le moteur est au ralenti depuis une durée minimum prédéterminée,
- Le modèle d'endommagement du catalyseur utilisé fait apparaître un niveau d'endommagement minimum déterminé,
- La dilution moyenne de l'huile depuis la dernière activation de la stratégie est inférieure à un seuil préétabli.

Une demande de désactivation du mode chauffage rapide sera émise par le module 27 si l'une des conditions suivantes est remplie :
- Le temps qui s'est écoulé depuis l'activation du mode de chauffage rapide est supérieur à une valeur fournie par le module 26 de surveillance de l'endommagement du catalyseur,
- La température ambiante n'est pas comprise entre les deux seuils déterminés délimitant la période favorable à la mise en oeuvre de la stratégie de chauffage rapide,
- Le couple moteur est supérieur à un seuil déterminé pendant un temps minimum déterminé, de sorte que les conditions normales de montée en température du catalyseur sont atteintes,

D'autre part, une fois le mode de chauffage rapide désactivé, il ne pourra plus être activé jusqu'au prochain démarrage.

Le module de décision 28 reçoit les demandes d'activation ou de désactivation du mode de chauffage rapide émises par le module de commande 27, il les transmet au gestionnaire 19 des modes de combustion. Il reçoit également des informations correspondant à des défauts dans les systèmes et le fonctionnement du moteur et de la ligne d'échappement et peut, selon la nature de ces défauts, inhiber la fonction de chauffage rapide. Il comporte également un circuit permettant d'activer manuellement ce mode.

Le mode de chauffage rapide est un mode de combustion moteur à part entière. Il est donc géré, dans la structure globale du contrôle moteur, de la même manière que les autres modes. Le gestionnaire 19 gère notamment la priorité entre ces différents modes. Les critères de gestion de ces priorités sont réglables, permettant ainsi de donner la priorité à la fonction souhaitée.

Lorsque le gestionnaire 19 donne la priorité à la stratégie de chauffage rapide, le coordinateur 23 gère le passage entre le mode en cours d'application (nominal) et le mode de chauffage rapide (Mcr) comme représenté sur la figure 6.

Ce dernier mode met en oeuvre des moyens liés au contrôle du moteur lui-même, c'est-à-dire aux modalités d'injection du carburant dans les cylindres et des moyens de gestion du circuit d'air à l'admission et à l'échappement. Un exemple de ce mode de combustion particulier est exposé dans la demande de brevet de la demanderesse déposée le même jour que la présente demande et intitulée *"Stratégie de chauffage rapide pour compenser le vieillissement d'un catalyseur d'oxydation d'un moteur Diesel".*

Le coordinateur applique donc des consignes spécifiques à cette stratégie : il modifie d'abord les consignes sur l'air, puis sur la pression d'injection (Pinj) et enfin sur l'injection (avances et débits). Ces consignes sont exécutées, par exemple, par contrôle en boucle fermée.

Les valeurs seuils permettant au module de commande 27 d'activer et de désactiver le mode de chauffage rapide sont déterminées par essais au banc moteur et/ou sur véhicule.

En ce qui concerne la fenêtre de température d'air, la fenêtre de température d'eau, la fenêtre de pression atmosphérique il convient de définir des plages d'utilisation qui permettent de limiter autant que possible la dilution de l'huile. Ces fenêtres sont donc déterminées après modélisation de la dilution.

Le temps après démarrage du moteur et avant activation du mode de chauffage rapide et la durée d'activation de ce mode se déterminent en fonction du compromis souhaité entre le niveau des émissions polluantes et la dilution de l'huile, pour une application et une charge de catalyseur donnée, et ceci avec un catalyseur de vieillissement donné. La méthodologie consiste à tester différentes fenêtres d'activation du mode de chauffage rapide sur cycle et de retenir le meilleur compromis. Concernant la dilution de l'huile engendrée par ce mode, on constate que globalement celle-ci est la plus élevée là où l'augmentation de la température est la plus forte, toutefois, il convient de relativiser cette constatation en fonction d'une part de l'augmentation de la température à l'échappement obtenue et d'autre part de l'augmentation des émissions à la source engendrées.

Les mesures effectuées par la demanderesse on permis de constater que le meilleur compromis vis-à-vis de la température et des émissions est obtenue à haut régime et forte charge. Il faut donc privilégier l'utilisation du mode de chauffage rapide dans cette zone du champ moteur.

En conclusion, les résultats des essais ont permis tous d'abord de montrer l'intérêt d'une telle stratégie vis-à-vis des émissions de polluants.

On constate une augmentation nette de la température en amont du catalyseur, qui de plus se maintient relativement longtemps après arrêt du mode, grâce à l'inertie thermique. Les polluants en aval sont plus important au départ mais sont réduits très rapidement ensuite grâce à l'amorçage plus rapide du catalyseur.

Ces essais ont permis aussi de montrer du point de vue compromis émissions/consommation l'intérêt de ne pas activer le mode de chauffage rapide dès le début du cycle et de l'activer uniquement sur les accélérations du cycle.

En effet, en début de cycle, la température d'eau est faible et les émissions à la source élevées en comparaison du gain en température échappement qui lui est faible. Avec la montée en température du moteur, les émissions à la source chute très rapidement pour revenir quasiment à un niveau identique au mode normal.

Par conséquent, l'utilisation du mode de chauffage rapide du catalyseur au démarrage du moteur permet, effectivement, de compenser la perte d'efficacité, due au vieillissement, de ce catalyseur, sans augmenter sa charge de métaux précieux.

## Revendications

1. Stratégie de mise en oeuvre d'un processus de chauffage rapide d'un catalyseur (8) d'oxydation intégré à la ligne d'échappement d'un moteur dont le fonctionnement est commandé par un calculateur de contrôle (4) comportant un gestionnaire des modes de combustion (19) et un coordinateur (23) de gestion du passage d'un mode de combustion à un autre, la durée d'activation du mode de chauffage rapide étant déterminée en fonction d'un modèle d'endommagement du catalyseur (8) **caractérisée en ce que** le moteur est un moteur diesel et que l'instant de la mise en oeuvre des moyens de chauffage rapide est fonction du temps écoulé depuis le démarrage du moteur et **en ce que** ladite détermination est effectuée au moyen d'une unité de surveillance et de contrôle (18) du processus de chauffage rapide connectée à l'entrée du gestionnaire des modes de combustion (19).

2. Stratégie selon la revendication 1, **caractérisée en ce que** l'unité de surveillance et de contrôle (18) est constituée d'un module (26) d'élaboration de l'état de vieillissement du catalyseur, d'un module (27) de commande du mode de chauffage rapide et d'un module de décision (28) pour transmettre l'instruction d'activation ou de désactivation dudit mode au gestionnaire des modes de combustion (19).

3. Stratégie selon la revendication 2, **caractérisé en ce que** le module (26) reçoit les informations fournit par une sonde de température placée en aval du catalyseur (8) et comptabilise le temps passé au dessus d'une température déterminée, d'une part dans un mode de fonctionnement moteur générant de l'exotherme aux bornes du catalyseur, et d'autre part, dans un mode générant ladite température uniquement à la source.

4. Stratégie selon la revendication 2 ou 3, **caractérisée en ce que** le module de commande (27) reçoit des informations concernant le temps écoulé depuis le démarrage du moteur, la température de l'air, de l'eau, la pression atmosphérique, la durée de fonctionnement au ralenti du moteur et la dilution moyenne de carburant dans l'huile depuis la dernière activation de la stratégie de chauffage rapide.

5. Stratégie selon la revendication 4, **caractérisée en ce que** le module de décision (28) reçoit en plus des demandes d'activation ou de désactivation du mode de chauffage rapide émises par le module de commande (27) des informations correspondant à des défauts dans les systèmes et le fonctionnement du moteur pour, selon la nature de ces défauts, transmettre au gestionnaire (19) une demande d'inhibition dudit mode.

6. Stratégie selon la revendication 5, **caractérisée en ce que** le module de décision (28) comporte un circuit permettant d'activer manuellement le mode de chauffage rapide.

7. Stratégie selon la revendication 6, **caractérisée en ce que**, lorsque une instruction de passage en mode de chauffage rapide est donnée au coordinateur (23) par le gestionnaire (19), celui-ci modifie d'abord les consignes sur l'air, puis sur la pression d'injection (Pinj) et enfin sur l'injection.

8. Stratégie selon l'une quelconque des revendications précédentes **caractérisée en ce que** le mode de chauffage rapide est activé lorsque les conditions suivantes sont satisfaites:
- La température d'air, la température d'eau, la pression atmosphérique, le temps qui s'est écoulé depuis le démarrage du moteur sont compris entre deux valeurs seuils prédéterminées, la valeur seuil inférieure correspondant au début de la période la plus favorable du cycle du moteur et la valeur seuil supérieure à l'obtention de la température d'efficacité du catalyseur,
- Le moteur est au ralenti depuis une durée minimum prédéterminée,
- Le modèle d'endommagement du catalyseur utilisé fait apparaître un niveau d'endommagement minimum déterminé,
- La dilution d'huile moyenne depuis la dernière activation du mode de chauffage rapide est inférieure à un seuil préétabli.

9. Stratégie selon l'une quelconque des revendications précédentes, **caractérisée en ce que** le mode de chauffage rapide est désactivé lorsqu'au moins une des conditions suivantes est satisfaite :
- Le temps qui s'est écoulé depuis l'activation du mode de chauffage rapide est supérieur à la durée correspondant à l'endommagement estimé du catalyseur.
- La température ambiante n'est pas comprise entre les deux seuils déterminés délimitant la période favorable à la mise en oeuvre du mode de chauffage rapide.
- Le couple moteur est supérieur à un seuil déterminé pendant un temps minimum déterminé, de sorte que les conditions normales de montée en température du catalyseur sont atteintes.

10. Stratégie selon la revendication 8 ou la revendication 9, **caractérisée en ce que** le mode de chauffage rapide est activé au plus une fois durant le temps de fonctionnement du moteur compris entre deux démarrages.

11. Stratégie selon l'une des revendications 8 ou 10, **caractérisée en ce que** la fenêtre de température d'air, la fenêtre de température d'eau et la fenêtre de pression atmosphérique sont déterminées en fonction de la dilution de carburant dans l'huile.

12. Stratégie selon l'une des revendications 8 à 11, **caractérisée en ce que** le temps après démarrage du moteur et avant activation du mode de chauffage rapide et la durée d'activation de ce mode sont déterminés en fonction du compromis émissions polluantes/dilution d'huile souhaité pour une application et une charge de catalyseur donnée, et avec un catalyseur de vieillissement donné.

13. Stratégie selon l'une des revendications 8 à 12, **caractérisée en ce que** le mode de chauffage rapide est activé lorsque le moteur fonctionne à haut régime et forte charge.

14. Stratégie selon l'une des revendications 8 à 13, **caractérisée en ce que** le mode de chauffage rapide est activé uniquement sur les accélérations du cycle du moteur.

## Claims

1. Strategy for implementing a rapid heating process for an oxidation catalyst (8) integrated into the exhaust line of an engine, the operation of which is actuated by a control computer (4) comprising a combustion modes manager (19) and a coordinator (23) for managing the transition from one combustion mode to another, the activation period of the rapid heating mode being determined as a function of a damage model of the catalyst (8), **characterised in that** the engine is a diesel engine and the moment of implementation of the rapid heating means is a function of the time elapsed since starting the engine, and **in that** said determination is carried out by means of a rapid heating process monitoring and control unit (18) connected to the input of the combustion modes manager (19).

2. Strategy according to claim 1, **characterised in that** the monitoring and control unit (18) consists of a module (26) for working out the state of ageing of the catalyst, a module (27) for actuating the rapid heating mode and a decision module (28) for transmitting the instruction to activate or deactivate said mode to the combustion modes manager (19).

3. Strategy according to claim 2, **characterised in that** the module (26) receives the information provided by a temperature probe placed downstream of the catalyst (8) and records the time spent above a determined temperature, on the one hand in an engine operation mode producing exothermy at the terminals of the catalyst and on the other hand in a mode producing said temperature only at the source.

4. Strategy according to either claim 2 or claim 3, **characterised in that** the actuation module (27) receives information regarding the time elapsed since starting the engine, the air temperature, the water temperature, the atmospheric pressure, the period of operation at idle speed of the engine and the average fuel dilution in oil since the last activation of the rapid heating strategy.

5. Strategy according to claim 4, **characterised in that** the decision module (28) receives, in addition to the requests, emitted by the actuation module (27), for the activation or deactivation of the rapid heating mode, information corresponding to faults in the systems and the operation of the engine for, depending on the nature of these faults, transmitting a request for the inhibition of said mode to the manager (19).

6. Strategy according to claim 5, **characterised in that** the decision module (28) comprises a circuit which makes it possible to activate the rapid heating mode manually.

7. Strategy according to claim 6, **characterised in that**, when an instruction to switch into rapid heating mode is given to the coordinator (23) by the manager (19), said manager firstly modifies the settings regarding the air, then regarding the injection pressure (Pinj) and finally regarding the injection.

8. Strategy according to any one of the preceding claims, **characterised in that** the rapid heating mode is activated when the following conditions are satisfied:
- the air temperature, the water temperature, the atmospheric pressure and the time elapsed since starting the engine are between two predetermined threshold values, the lower threshold value corresponding to the start of the most favourable period of the engine cycle and the upper threshold value corresponding to the achievement of the efficiency temperature of the catalyst,
- the engine has been at idle speed for a predetermined minimum period,
- the damage model of the catalyst used produces a determined minimum level of damage,
- the average oil dilution since the last activation of the rapid heating mode is lower than a pre-established threshold.

9. Strategy according to any one of the preceding claims, **characterised in that** the rapid heating mode is deactivated when at least one of the following conditions is satisfied:
- the time which has passed since the activation of the rapid heating mode is greater than the period corresponding to the estimated damage of the catalyst,
- the ambient temperature is not between the two determined thresholds defining the period which is favourable for the implementation of the rapid heating mode,
- the engine torque is greater than a determined threshold for a determined minimum period of time, such that the normal warm-up conditions of the catalyst are reached.

10. Strategy according to either claim 8 or claim 9, **characterised in that** the rapid heating mode is activated once at the most during the operation period of the engine between two starts.

11. Strategy according to either claim 8 or claim 10, **characterised in that** the air temperature window, the water temperature window and the atmospheric pressure window are determined as a function of the fuel dilution in oil.

12. Strategy according to any one of claims 8 to 11, **characterised in that** the time since starting the engine and before activating the rapid heating mode and the period of activation of this mode are determined as a function of the compromise between polluting emissions/desired oil dilution for an application and a given catalyst load, and with a catalyst of given ageing.

13. Strategy according to any one of claims 8 to 12, **characterised in that** the rapid heating mode is activated when the engine operates at high speed and under heavy load.

14. Strategy according to any one of claims 8 to 13, **characterised in that** the rapid heating mode is activated only with regard to the accelerations of the engine cycle.

## Patentansprüche

1. Strategie für das Einschalten eines Schnellaufheizprozesses eines Oxidationskatalysators (8), der in die Abgasstrecke eines Motors integriert ist, dessen Betrieb durch einen Steuerrechner (4) betätigt wird, der eine Steuerung der Verbrennungsmodi (19) und einen Koordinator (23) für die Steuerung des Übergangs von einem Verbrennungsmodus in einen anderen aufweist, wobei die Dauer der Aktivierung des Schnellaufheizmodus in Abhängigkeit von einem Schadensmuster des Katalysators (8) bestimmt wird, **dadurch gekennzeichnet, dass** der Motor ein Dieselmotor ist und dass der Zeitpunkt der Einschaltung der Mittel für die Schnellaufheizung eine Funktion der ab dem Starten des Motors vergangenen Zeit ist und dass die Bestimmung mit Hilfe einer Einheit für die Überwachung und Kontrolle (18) des schnellen Aufheizprozesses erfolgt, die mit dem Eingang der Steuerung der Verbrennungsmodi (19) verbunden ist.

2. Strategie nach Anspruch 1, **dadurch gekennzeichnet, dass** die Einheit für die Überwachung und Kontrolle (18) von einem Modul (26) für die Verarbeitung des Alterungszustands des Katalysators, einem Modul (27) für die Betätigung des Schnellaufheizmodus und einem Entscheidungsmodul (28) für die Übersendung des Befehls für die Aktivierung oder die Deaktivierung des Modus an die Steuerung der Verbrennungsmodi (19) gebildet ist.

3. Strategie nach Anspruch 2, **dadurch gekennzeichnet, dass** das Modul (26) die Informationen empfängt, die von einer Temperatursonde, die dem Katalysator (8) nachgeschaltet ist, bereitgestellt werden, und die Zeit berechnet, die oberhalb einer bestimmten Temperatur einerseits in einem Motorbetriebsmodus vergeht, in dem die Exotherme an den Klemmen des Katalysators erzeugt wird, und andererseits in einem Modus vergeht, in dem die Temperatur einzig an der Quelle erzeugt wird.

4. Strategie nach Anspruch 2 oder 3, **dadurch gekennzeichnet, dass** das Betätigungsmodul (27) Informationen empfängt, welche die ab dem Starten des Motors vergangene Zeit, die Temperatur der Luft, des Wassers, den atmosphärischen Druck, die Dauer des Betriebs bei abgebremstem Motor und die durchschnittliche Lösung von Kraftstoff in dem Öl seit der letzten Aktivierung der Schnellaufheizstrategie betreffen.

5. Strategie nach Anspruch 4, **dadurch gekennzeichnet, dass** das Entscheidungsmodul (28) außer den Anforderungen für die Aktivierung oder Deaktivierung des Schnellaufheizmodus, die von dem Betätigungsmodul (27) gesendet werden, Informationen empfängt, die Fehlern in den Systemen und im Motorbetrieb entsprechen, um je nach Art dieser Fehler eine Anforderung für die Sperrung dieses Modus an die Steuerung (19) zu übertragen.

6. Strategie nach Anspruch 5, **dadurch gekennzeichnet, dass** das Entscheidungsmodul (28) eine Schaltung aufweist, mit der sich der Schnellaufheizmodus manuell aktivieren lässt.

7. Strategie nach Anspruch 6, **dadurch gekennzeichnet, dass**, wenn von der Steuerung (19) an den Koordinator (23) ein Befehl für den Übergang in den Schnellaufheizmodus erteilt wird, diese zunächst die Einstellwerte für die Luft, dann für den Einspritzdruck (Pinj) und schließlich für die Einspritzung ändert.

8. Strategie nach einem der vorhergehenden Ansprüche, **dadurch gekennzeichnet, dass** der Schnellaufheizmodus aktiviert wird, wenn die folgenden Bedingungen erfüllt sind:
- die Lufttemperatur, die Wassertemperatur, der atmosphärische Druck, die seit dem Starten des Motors vergangene Zeit liegen zwischen zwei vorab festgelegten Schwellwerten, wobei der untere Schwellwert dem Beginn der günstigsten Periode des Motorzyklus und der obere Schwellwert dem Erreichen der Effizienztemperatur des Katalysators entspricht,
- der Motor ist seit einer vorab festgelegten Mindestdauer abgebremst,
- das Schadensmuster des verwendeten Katalysators zeigt ein bestimmtes Mindestschadensniveau,
- die durchschnittliche Lösung von Öl seit der letzten Aktivierung des Schnellaufheizmodus ist geringer als ein vorab festgelegter Schwellwert.

9. Strategie nach einem der vorhergehenden Ansprüche, **dadurch gekennzeichnet, dass** der Schnellaufheizmodus deaktiviert wird, wenn mindestens eine der folgenden Bedingungen erfüllt ist:
- Die Zeit, die seit der Aktivierung des Schnellaufheizmodus vergangen ist, ist länger als die Dauer, die dem geschätzten Schaden des Katalysators entspricht.
- Die Umgebungstemperatur liegt nicht innerhalb der zwei bestimmten Schwellwerte, welche die für die Einschaltung des Schnellaufheizmodus günstige Periode begrenzen.
- Das Drehmoment des Motors ist während einer bestimmten Mindestzeit höher als ein bestimmter Schwellwert, derart, dass die normalen Bedingungen für den Temperaturanstieg des Katalysators erreicht sind.

10. Strategie nach Anspruch 8 oder Anspruch 9, **dadurch gekennzeichnet, dass** der Schnellaufheizmodus während der Betriebszeit des Motors zwischen zwei Startvorgängen höchstens ein Mal aktiviert wird.

11. Strategie nach einem der Ansprüche 8 oder 10, **dadurch gekennzeichnet, dass** das Fenster für die Lufttemperatur, das Fenster für die Wassertemperatur und das Fenster für den atmosphärischen Druck in Abhängigkeit von der Lösung von Kraftstoff in dem Öl bestimmt werden.

12. Strategie nach einem der Ansprüche 8 bis 11, **dadurch gekennzeichnet, dass** die Zeit nach Starten des Motors und vor Aktivierung des Schnellaufheizmodus und die Dauer der Aktivierung dieses Modus in Abhängigkeit von dem Verhältnis Schadstoffemissionen/Öllösung bestimmt werden, das für eine gegebene Anwendung und eine gegebene Katalysatorladung und bei einem Katalysator mit einer gegebenen Alterung gewünscht ist.

13. Strategie nach einem der Ansprüche 8 bis 12, **dadurch gekennzeichnet, dass** der Schnellaufheizmodus aktiviert wird, wenn der Motor bei hoher Drehzahl und hoher Last läuft.

14. Strategie nach einem der Ansprüche 8 bis 13, **dadurch gekennzeichnet, dass** der Schnellaufheizmodus nur bei Beschleunigungen des Motorzyklus aktiviert wird.
